(19) Europäisches Patentamt
European Patent Office
Office européen des brevets

(11) **EP 2 346 041 A1**

(12) **EUROPEAN PATENT APPLICATION**
published in accordance with Art. 153(4) EPC

(43) Date of publication:
**20.07.2011 Bulletin 2011/29**

(51) Int Cl.:
***G11B 7/135*** *(2006.01)*     ***G02B 13/00*** *(2006.01)*
***G02B 13/18*** *(2006.01)*     ***G11B 7/125*** *(2006.01)*

(21) Application number: **09820533.9**

(22) Date of filing: **06.10.2009**

(86) International application number:
**PCT/JP2009/067404**

(87) International publication number:
**WO 2010/044355 (22.04.2010 Gazette 2010/16)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **17.10.2008 JP 2008268663**

(71) Applicant: **Konica Minolta Opto, Inc.**
**Hachioji-shi, Tokyo 192-8505 (JP)**

(72) Inventor: **TOTSUKA Hidekazu**
**Hachioji-shi**
**Tokyo 192-8505 (JP)**

(74) Representative: **Henkel, Feiler & Hänzel**
**Patentanwälte**
**Maximiliansplatz 21**
**80333 München (DE)**

(54) **OBJECTIVE LENS AND OPTICAL PICKUP DEVICE**

(57)     Provided is an optical pickup device which can record/reproduce information appropriately at the time of temperature change or when a multilayer disc is used. Also provided is an objective lens for use therein. Since spherical aberration resulting from a change in refractive index of an objective lens (OBJ) increases when a temperature change occurs, a finite luminous flux is made to impinge on the objective lens (OBJ) by moving a collimate lens (CL) in the direction of the optical axis by means of a uniaxial actuator (AC1), thus minimizing spherical aberration. Since spherical aberration also increases when a (BD) is a multilayer optical disc and when an interlayer jump from a layer to a second layer of a plurality of information recording surfaces takes place, the collimate lens (CL) is moved accordingly in the direction of the optical axis. In contrast, since the tilt sensitivity of the objective lens (OBJ) is increased, occurrence of third-order comatic aberration is limited effectively even when a finite luminous flux is made to impinge on the objective lens (OBJ).

FIG. 2

EP 2 346 041 A1

**Description**

**TECHNICAL FIELD**

The present invention relates to an optical pickup apparatus that records and/or reproduces information by using a light source with a short wavelength, and to an objective lens used for the optical pickup apparatus.

**BACKGROUND ART**

For the development of a tendency toward large capacity of an optical disc and for the development of a tendency toward high density of an optical disc in recent years, development and practical implementation of high density optical disc such as a Blu-ray Disc (which is abbreviated to BD) are advanced. For conducting the optimum recording or reproducing for the high density optical disc for which the recording capacity has been improved, it is necessary to minimize a diameter of an optical spot converged through an optical system of the optical pickup device used in optical disc device (which may sometimes be called an optical information recording/reproducing device, hereinafter). Since the spot diameter is proportional to $\lambda$/NA (m this case, $\lambda$ represents a wavelength of a light source, NA represents a numerical aperture of an objective lens), a diameter of the spot can be made small by a shorter wavelength of a light source and by a higher numerical aperture. With respect to making a wavelength to be shorter, studies of blue-violet semiconductor laser having a wavelength of about 400 nm have been advanced, and it has already been put to practical use, thus, an optical pickup device which has specifications including numerical aperture NA 0.85 and a light source wavelength 405 nm, and records and/or reproduces information (hereinafter, records/reproduces information) on a BD, is already on the market.

Incidentally, when an objective lens for an optical pickup apparatus is made of a plastic material, there is a benefit that mass production at a low cost is possible. However, in the case of an objective lens made of plastic material, there is a problem that spherical aberration tends to be caused by temperature changes because a change in refractive index of an objective lens made of plastic resulting from a temperature change is greater, when the objective lens made of plastic material is compared with an objective lens made of glass.

Accordingly, in an optical pickup apparatus which records/reproduces information for an optical disc such as a BD, numerical aperture at the image side NA is 0.8 or more in general, and spherical aberration caused by temperature changes becomes to be greater relatively. Therefore, there has been needed some sort of correcting means. In Patent Document 1, therefore, the correction is made by moving a beam expander arranged between a light source and an objective lens in the direction of an optical axis, to change the magnification of the optical system in accordance with generated spherical aberration.

**CITATION LIST**

**PATENT LITERATURE**

Patent document 1: Unexamined Japanese Patent Application Publication No. 2002-82280

**SUMMARY OF INVENTION**

**TECHNICAL PROBLEM**

Incidentally, in an optical element including an objective lens made of plastic, it is unavoidable that aberrations to a certain extent remains due to manufacturing errors, and coma remains as one of the aberrations, which is the real situation. Therefore, when mounting an objective lens on an optical pickup apparatus, the coma is eliminated by inclining the optical axis of the objective lens with respect to the reference axis of the optical pickup apparatus. This is called a skew adjustment.

However, after strenuous efforts of studies by the present inventor, it was found out that, even under the condition that the skew adjustment had been carried out and the objective lens had been mounted with its optical axis inclined properly with respect to the optical axis of the incident light, coma (especially, the third-order coma) can vary so as to exceed its tolerance when the optical pickup apparatus actually works. More concretely, it was found out that, in the case of employing high numerical aperture ofNA 0.8 or more, under the condition that the temperature change becomes excessively great and that the magnification of the objective lens is changed to correct spherical aberration caused in a plastic lens, there is a fear that the coma fluctuates to exceed its tolerance unsatisfactorily, and appropriate recording/reproducing of information cannot be conducted, as shown in Patent Document 1. In particular, in the so-called multilayer optical disc that is composed a plurality of information recording surfaces piled up in the direction of the thickness, more serious problems can happen. The reason for this is that the magnification of the objective lens is changed for conducting recording/reproducing appropriately for each layer of the multilayer optical disc, and a change of coma grows greater under this condition, resulting in a greater excess of a tolerance value. In addition, spherical aberration can be caused also by wavelength fluctuation of a semiconductor laser representing a light source, thus, when a magnification of the objective lens is changed for correction of the spherical aberration, the same problem is caused. Incidentally, the problem in a multilayer disc and the problem in wavelength fluctuation are not problems peculiar to a plastic objective lens, but they are problems which can apply also to a glass objective lens. In contrast to this, in the optical pickup apparatus that records/reproduces information for the conventional CD and DVD, the numerical aperture on the image side NA is 0.6 or less. Therefore, spherical aberration generated by the aforesaid temperature changes, a multilayer optical disc, or wavelength fluctuation is not great, even when the object lens is a plastic lens, and it is not necessary to correct by changing a magnification of the optical system as shown in Patent Document 1. Thus, if skew adjustment is conducted in the course of assembling, coma is hardly generated thereafter, which has not been a problem.

Further, the inventor of the present invention further found out a problem that, in an optical system wherein +0.20 λrms or more of spherical aberration is generated in comparison with an optical system in a reference condition (for example, the situation that the temperature is higher and/or the protective substrate is thicker than those in the reference condition), coma is hardly corrected even when conducting a tilt-servo operation for correcting coma by tilting a lens.

The present invention has been achieved in view of these problems. The present invention is aimed to provide an optical pickup apparatus which can record/reproduce information appropriately at the time of temperature change, of using a multilayer disc and/or of fluctuations of wavelength, and to provide an objective lens used for the optical pickup apparatus. Further, the present invention is aimed to provide an optical pickup apparatus that makes it possible to conduct a tilt-servo operation which corrects coma by tilting a lens in an optical system wherein spherical aberration of +0.20 λrms or more is generated in comparison with an optical system in the reference state (for example, the situation that the temperature is higher and/or the protective substrate is thicker than those in the reference condition), and to provide an objective lens used for the aforesaid optical pickup apparatus.

**SOLUTION TO PROBLEM**

An objective lens for an optical pickup apparatus described in claim 1, is an objective lens for an optical pickup apparatus for recording and/or reproducing information for an optical disc. The optical pickup apparatus comprises a light source for emitting a light flux with a wavelength λ1 of 500 nm or less, an objective lens for converging a light flux traveling from the light source onto an information recording surface of the optical disc through a protective layer with a thickness t1, and a light-receiving element for receiving a light flux which has been reflected on the information recording surface and has passed through the objective lens. The objective lens is characterized in that a predetermined numerical aperture at an image side which is necessary for recording and/or reproducing information for the optical disc is 0.7 or more, and the objective lens satisfies the following expression.

$$1.0 < |LTR3|/|DTR3| \qquad (1)$$

In the expression, LTR33 is a third-order coma caused when the objective lens is tilted at a unit angle, the optical disc is not tilted, and a parallel light flux enters the objective lens, and DTR3 is a third-order coma caused when the objective lens is not tilted, the optical disc is tilted at a unit angle, and a parallel light flux enters the objective lens.

In a general designing of lenses, the offense against the sine condition is satisfied in order to enhance the characteristics of the off-axis coma. Accordingly, the lens design to make a sensitivity of a lens tilt (for example, LTR3) and a sensitivity of an optical disc tilt (for example, DTR3) equivalent is known as a common knowledge. In contrast, after strenuous efforts of studies by the present inventor, the present inventor has found out that the above problems can be solved by employing a lens design in which the offense against the sine condition is not satisfied intentionally from the viewpoint which is different from the conventional common knowledge about a lens design.

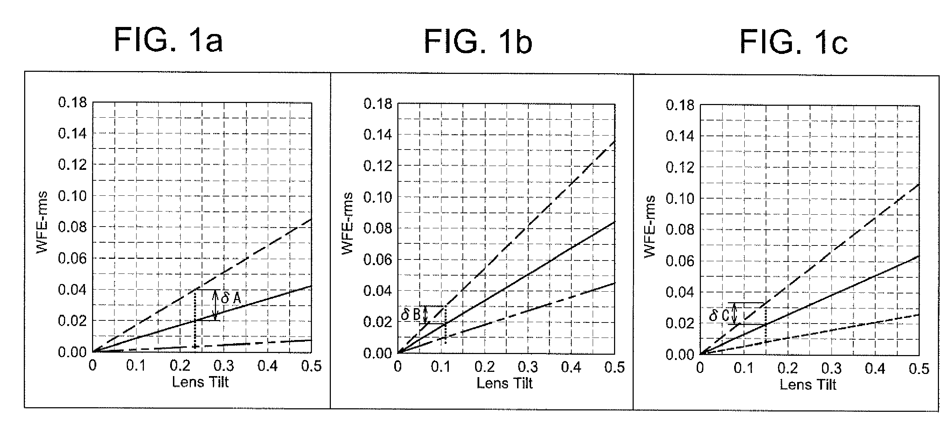

The principal of the present invention will be described more concretely with referring to the drawings. Fig. 1a shows aberration characteristics of the objective lens relating to a comparative example, Fig. 1b shows aberration characteristics of the objective lens relating to an example of the present invention, and Fig.1c shows aberration characteristics of the objective lens relating to another example of the present invention. In the drawings, the vertical axis represents a third-order coma and the horizontal axis represents a tilt angle of an objective lens (inclination of the optical axis of the objective lens with respect to the reference axis of the optical pickup apparatus). Each objective lens is formed of plastic. The value of DTR3 is a predetermined value which is defined by the specifications of an optical disc.

For example, when informative is recorded/reproduced for a two-layer optical disc including two information recording surfaces layered in the thickness direction, while thickness t1 of the protective substrate for the first layer is 0.075 mm and thickness t2 of the protective substrate for the second layer is 0.1 mm, the objective lens is sometimes designed based on the reference value of 0.0875 mm which is the intermediate value of them. When the objective lens designed in such the manner is used, spherical aberration is generated essentially due to the thickness of the protective substrate under the condition that light is converged onto any one of the information recording surfaces of the two-layer optical disc. Further, as described above, spherical aberration is generated resulting from a change in refractive index caused by temperature change. When correcting these two types of spherical aberration by the magnification change, the coma especially can make a problem.

In Figs. 1a to 1c, a solid line represents the third-order coma caused when a parallel light flux enters the objective lens to be converged onto an information recording surface of a virtual optical disc having a protective layer with a thickness or 0.0875 mm which is a design reference, under the temperature condition of 35C°, a two-dot chain line represents the third-order coma caused when a finite light flux, which can correct spherical aberration properly, enters the objective lens to be converged on the information recording surface for the second layer whose the protective layer is 0.1 mm in thickness, under the temperature condition of 75C°, and a dotted line represents the third-order coma caused when a finite light flux which can correct spherical aberration properly, enters the objective lens to be converged on the information recording surface for the first layer whose protective layer is of 0.075 mm in thickness, under the temperature condition of-10C°.

Herein, it is assumed that there is an objective lens in which a residual coma of, for example, about 0.02 λrms is generated. The comparative example shown in Fig. 1a satisfies the sine condition and LTR3 = DTR3 holds. Therefore, by inclining the optical axis ofthe objective lens by 0.23 degree with respect to the incident light through a skew adjustment, the third-order coma is made to be zero, where the third-order coma is generated when a parallel light flux enters the objective lens to be converged onto the information recording surface of the virtual optical disc having a protective substrate with a thickness of 0.0875 mm which is the design reference, under the temperature condition of 35C°. However, when the objective lens is mounted in this manner, spherical aberration is generated under the temperature condition of-10C° and a finite light flux is requested to enter the objective lens so as to correct the spherical aberration corresponding to the lowering of temperature, which causes the third-order coma. In other words, it can be said a problem caused by emitting a finite light flux for the objective lens in which the skew adjustment has been carried out. Additionally, an actual thickness of protective substrates of a two-layer optical disc differs by ±0.0125 mm from the design reference of 0.875 mm. When light is converged onto the information recording surface of the first layer in which it is in more strict condition and the protective layer is 0.075 mm in thickness, the convergent angle or divergent angle of the finite light flux is requested to be deepened, which causes the third-order coma additionally. It results in generating the third-order coma of 0.02 λrms in total (corresponding to δA in Fig. 1a), which can causes a fear that information is hardly recorded/ reproduced properly in the optical pickup apparatus, even if the skew adjustment is carried out in assembling operation. The singular problem can be occurred for an optical disc having three or more layers of information recording surfaces.

Therefore, after strenuous efforts of studies by the present inventor, it has been found out that the problems in the above comparative example can be solved when the above expression (1) is satisfied, in other words, LTR33 > DTR3 holds. Figs. 1b and 1c show examples of an objective lens satisfying the expression (1), wherein tilt sensitivity of the objective lens is increased. In the example shown in Fig. 1b, the optical axis of the objective lens is tilted by 0.12 degree with respect to the incident light, whereby the third-order coma generated when a parallel light flux enters the objective lens under the temperature condition of 35°C to be converged onto the information recording surface of a virtual optical disc having a protective substrate with thickness of 0.0875 mm being the design reference, becomes zero. In this case, the third coma generated when the light flux is converged onto an information recording surface of the first layer whose protective substrate is 0.075 mm in thickness in the two-layer optical disc under the temperature condition of-10°C, becomes 0.01 λrms (corresponding to δB in Fig. 1b) which is the half the third-order coma of the comparative example. Thus, even when the skew adjustment is carried out in the assembling operation and the magnification of the objective lens is changed for handling a temperature change and a two-layer optical disc, information can be recorded/ reproduced properly in the optical pickup apparatus.

Similarly, in the example shown in Fig. 1c, the optical axis of the objective lens is tilted by 0.15 degree with respect to the incident light, whereby the third-order coma generated when a parallel light flux enters the objective lens under the temperature condition of 35°C to be converged onto the information recording surface of a virtual optical disc having a protective substrate with thickness of 0.0875 mm being the design reference, becomes zero. In this case, the third coma generated when the light flux is converged onto an information recording surface of the first layer whose protective substrate is 0.075 mm in thickness in the two-layer optical disc under the temperature condition of-10°C, becomes 0.012 λrms (corresponding to δC in Fig. 1b) which is the almost half the third-order coma of the comparative example. Thus, even when the skew adjustment is carried out in the assembling operation and the magnification of the objective lens is changed for handling a temperature change and a two-layer optical disc, information can be recorded/ reproduced properly in the optical pickup apparatus.

Further, there is a problem that, in an optical system in which +0.20 λrms or more of spherical aberration is caused in comparison with the optical system under the reference condition (for example, in the case that the temperature becomes higher and/or the protective substrate becomes thicker in comparison with the reference condition), a tilt-servo operation which tilts a lens to correct coma results in the failure of the correction. The present inventor has found that a big cause of that comes from the small change amount of the third-order coma corresponding to the lens-tilt angle under the condition of a higher temperature and a thicker protective substrate than those of Fig 1a, wherein the temperature is 75°C and the thickness of the protective substrate is 0.1 mm, whereby, the coma is hardly corrected just by tilting the lens. According to the present invention, as can be seen from Fig.1b and 1c, under the condition of the high temperature and thick protective substrate wherein the temperature is the temperature is 75°C and the thickness of the protective substrate is 0.1 mm, the change amount of the third-order coma corresponding to the lens-tilt angle can be enlarged, which enables to carry out the tilt-servo operation which corrects the coma by tilting a lens. When the objective lens is made of glass, it is less affected by a temperature change but is affected by the thickness of the protective substrate. Therefore, the present invention is effective also for a glass objective lens.

The objective lens descried in claim 2 is the objective lens according to claim 1, characterized by satisfying the following expression.

$$1.1 \leq |LTR3|/|DTR3| \leq 2.0 \qquad (1')$$

The objective lens descried in claim 3 is the objective lens according to claim 1, characterized by satisfying the following expression. Herein, DTR33(+) has been defined based on the specifications of the optical disc and a known quantity.

$$0.4 \leq |LTR3(+)|/|DTR3(+)| \leq 1.2 \qquad (1A).$$

In the expression, LTR33(+) is a third-order coma caused when the objective lens is tilted at a unit angle and the optical disc is not tilted, under a condition that spherical aberration resulting from a magnification correction of the objective lens is corrected to be minimum, in an optical system which causes a spherical aberration of +0.20 λrms or more in comparison with an optical system in a reference condition (for example, the third-order coma caused when the objective lens is tilted by a unit angle, under the condition that the ambient temperature is 75°C, an optical disc satisfying t1 = 0.1 mm, and the spherical aberration resulting from a change in refractive index of the objective lens is corrected to be minimized by the magnification correction), and

DTR3(+) is a third-order coma caused when the objective lens is not tilted and the optical disc is tilted at a unit angle, under a condition that a spherical aberration resulting from a magnification correction of the objective lens is corrected to be minimum, in an optical system which causes a spherical aberration of +0.20 λrms or more in comparison with an optical system in a reference condition (for example, the third-order coma caused when the optical disc is tilted by a unit angle, under the condition that the ambient temperature is 75°C, an optical disc satisfying t1 =0.1 mm, and the spherical aberration resulting from a change in refractive index of the objective lens is corrected to be minimized by the magnification correction).

When the conditional expression (1A) is satisfied, in an optical system in which spherical aberration of+0.20 λrms or more is caused in comparison with an optical system under the reference condition (for example, the case that the temperature becomes higher and the protective substrate becomes thicker than the reference condition), the change amount of the third-order coma corresponding to the lens-tilt angle can be enlarged, which enables to provide an optical pickup apparatus in which the tilt-servo operation to correct the coma by tilting a lens is easily carried out.

The objective lens described in claim 4 is the objective lens according to any one of claims 1 to 3, characterized in that an amount of offense against a sine condition OSC is represented by OSC = (sinα/sinα'-ml), where α' is an incident angle of a ray with an optical axis, wherein the ray enters an arbitral position within an effective aperture ofthe objective lens, and α is an outgoing angle ofthe ray with the optical axis formed when the ray outgoes from the objective lens, and the amount ofoffense against the sine condition OSC satisfies the following expression at any position within the effective aperture of the objective lens.

$$-0.02 \le OSC \le 0.01 \qquad (2)$$

In the expression, ml is a magnification of the objective lens when information is recorded or reproduced for the optical disc.

When the conditional expression (2) is satisfied, there is obtained an effect that the generation of the higher order coma can be controlled while the effect of the present invention, comes from the conditional expression (1) is maintained, and that the generation of coma corresponding to the image height can be reduced.

The objective lens described in claim 5 is the objective lens according to any one of claims 1 to 4, characterized in that the objective lens comprises an optical surface formed of a refractive surface. In the objective lens made of plastic and including an optical surface composed of a refractive surface, in other words, the objective lens made of plastic without a diffractive structure for correcting spherical aberration caused when the temperature changes, the spherical aberration resulting from a temperature change becomes larger and it requires relatively large amount of change in magnification for correcting the spherical aberration, which makes the affect due to the present invention large.

The objective lens descried in claim 6 is the objective lens according to any one of claims I to 4, characterized in that the objective lens comprises an optical surface including a diffractive structure.

The objective lens descried in claim 7 is the objective lens according to any one of claims 1 to 6, characterized in that the objective lens is made of plastic.

An optical pickup apparatus descried in claim 8 is an optical pickup apparatus for recording and/or reproducing information for an optical disc. The optical pickup apparatus is characterized by comprising: a light source for emitting a light flux with a wavelength $\lambda 1$ of 500 nm or less,

an objective lens for converging a light flux traveling from the light source onto an information recording surface of the optical disc through a protective layer with a thickness t1, and

a light-receiving element for receiving a light flux which has been reflected on the information recording surface and has passed through the objective lens,

wherein a predetermined numerical aperture at an image side which is necessary for recording and/or reproducing information for the optical disc is 0.7 or more, and

the objective lens satisfies the following expression. The action and effect of the present invention are the same as those of claim 1.

$$1.0 < |LTR3|/|DTR3| \qquad (1)$$

In the conditional expression, LTR3 is a third-order coma caused when the objective lens is tilted at a unit angle, the optical disc is not tilted, and a parallel light flux enters the objective lens, and DTR3 is a third-older coma caused when the objective lens is not tilted, the optical disc is tilted at a unit angle, and a parallel light flux enters the objective lens

The optical pickup apparatus described in claim 9 is the optical pickup apparatus according to claim 7, characterized by satisfying the following expression.

$$1.1 \le |LTR3|/|DTR3| \le 2.0 \qquad (1')$$

The optical pickup apparatus described in claim 10 is the optical pickup apparatus according to claim 8 or 9, characterized by satisfying the following expression.

$$0.4 \le |LTR3(+)|/|DTR3(+)| \le 1.2 \qquad (1A)$$

In the conditional expression, LTR3(+) is a third-order coma caused when the objective lens is tilted at a unit angle and the optical disc is not tilled, under a condition that spherical aberration resulting from a magnification correction of the objective lens is corrected to be minimum, in an optical system which causes a spherical aberration of+0.20 $\lambda$rms or more in comparison with an optical system in a reference condition, and

DTR3(+) is a third-order coma caused when the objective lens is not tilted and the optical disc is tilted at a unit angle, under a condition that a spherical aberration resulting from a magnification correction of the objective lens is corrected to be minimum, in an optical system which causes a spherical aberration of +0.20 $\lambda$rms or more in comparison with an optical system in a reference condition.

The optical pickup apparatus described in claim 11 is the optical pickup apparatus according to any one of claims 8 to 10, characterized in that an amount of offense against a sine condition OSC is represented by OSC = (sin $\alpha$ / sin $\alpha$'-ml), where $\alpha$ is an incident angle of a ray with an optical axis, wherein the ray enters an arbitral position within an effective aperture of the objective lens, and $\alpha$ is an outgoing angle of the ray with the optical axis formed when the ray outgoes from the objective lens, and

the amount of offense against the sine condition OSC satisfied the following expression at any position within the effective aperture of the objective lens.

$$-0.02 \leq OSC \leq 0.01 \qquad\qquad (2)$$

In the conditional expression, ml is a magnification of the objective lens when information is recorded or reproduced for the optical disc.

The optical pickup apparatus described in claim 12 is the optical pickup apparatus according to any one of claims 8 to 11, characterized in that the objective lens comprises an optical surface formed of a refractive surface.

The optical pickup apparatus described in claim 13 is the optical pickup apparatus according to any one of claims 8 to 11, characterized in that the objective lens comprises an optical surface including a diffractive structure.

The optical pickup apparatus described in claim 14 is the optical pickup apparatus according to any one of claims 8 to 13, characterized by further comprising a coupling lens arranged at a position between the light source and the objective lens and being displacable in the direction of an optical axis,

wherein the optical pickup apparatus corrects a spherical aberration caused in an optical system including the coupling lens and the objective lens, by displacing the coupling lens in the direction of the optical axis.

The optical pickup apparatus described in claim 15 is the optical pickup apparatus according to claim 14, characterized in that the optical pickup apparatus corrects a spherical aberration caused in the optical system resulting from a temperature change, by displacing the coupling lens in the direction of the optical axis.

The optical pickup apparatus described in claim 16 is the optical pickup apparatus according to claim 14 or 15, characterized in that the optical disc comprises a plurality of information recording surfaces, and the optical pickup apparatus corrects a spherical aberration by displacing the coupling lens in the direction of the optical axis, the spherical aberration being caused when an information recording surface for which information is recorded and/or reproduced is changed to another information recording surface,

The optical pickup apparatus described in claim 17 is the optical pickup apparatus according to any one of claims 8 to 16, characterized in that the objective lens is mounted in the optical pickup apparatus with an optical axis ofthe objective lens tilted with respect to an optical axis of the optical pickup apparatus.

The optical pickup apparatus described in claim 18 is the optical pickup apparatus according to any one of claims 8 to 17, characterized in that the objective lens is made of plastic.

(Optical pickup apparatus)

An optical pickup apparatus according to the present invention is configured to record/reproduce information of an optical disc, and comprises a light source, an objective lens for converging a light flux traveling from the light source through a protective substrate of an optical disc onto an information recording surface, and a light-receiving element for receiving a light flux which has been reflected on the information recording surface and has passed through the objective lens. The optical pickup apparatus preferably comprises a coupling lens arranged at a position between the light source and the objective lens and being displacable in the direction ofthe optical axis. Hereinafter, the first light source corresponds to the light source in the claims and the first optical disc corresponds to the optical disc in the claims.

An optical pickup apparatus for recording/reproducing information for just one kind of optical disc, may comprise just one light source (in such the optical pickup apparatus, an optical disc and a light source are sometimes referred as the first optical disc and the first light source, respectively). On the other hand, an optical pickup apparatus for recording/reproducing information for plural kinds of optical discs, may comprises plural light sources. For an example of an optical pickup apparatus for recording/reproducing information for three kinds of optical discs of the first optical disc, the second optical disc, and the third optical disc, preferably includes at least three light sources of the first light source, second light source, and third light source. In the optical pickup apparatus for recording/reproducing information for three kinds of optical discs of the first optical disc, the second optical disc, and the third optical disc, it is preferable that a first light flux traveling from the first light source is converged on an information recording surface of the first optical disc, a second light flux traveling from the second light source is converged on an information recording surface of the second optical disc, and a third light flux traveling from the third light sources is converged on an information recording surface of the third optical disc. It is preferable that the optical pickup apparatus further comprises a light-receiving element for receiving a reflection light flux from the information recording surface of the first optical disc, the second optical disc, or the third optical disc.

(Optical discs)

The first optical disc includes a protective substrate with a thickness t1 and an information recording surface. When the optical pickup apparatus is configured to record/reproduce information for plural kinds of optical discs, the second optical disc includes a protective substrate with a thickness t2 (t 1 < t2) and an information recording surface. The third optical disc includes a protective substrate with a thickness t3 (t2 < t3) and an information recording surface. Herein, it is preferable that the first optical disc is a BD, the second optical disc is a DVD, and the third optical disc is a CD. However, the discs are not limited to those. Each of the first optical disc, the second optical disc, and the third optical disc may be a multilayered optical disc including plural information recording surfaces arranged in the thickness direction. Especially, when the first optical disc is a multilayered optical disc including plural information recording surfaces arranged in the thickness direction, the present invention is effective more significantly.

As an example of the first optical disc, there is cited an optical disc meeting a standard that information is recorded/reproduced with an objective lens with NA 0.85 and the thickness of the protective layer is about 0.1 mm (such as a BD, as a Blu-ray Disc). As an example of the second optical disc, there is cited an optical disc meeting a standard that information is recorded/reproduced with an objective lens with NA of about 0.60 to 0.67 and the thickness of the protective layer is about 0.6 mm (such as a DVD series of optical discs). As examples of the DVD series of optical discs, there are DVD-ROM, DVD-Video, DVD-Audio, DVD-RAM, DVD-R, DVD-RW, DVD+R and DVD+RW. As an example of the third optical disc, there is cited an optical disc meeting a standard that information is recorded/reproduced with an objective lens with NA of about 0.45 to 0.51 and the thickness ofthe protective layer is about 1.2 mm (such as a CD series of optical discs). As examples of the CD series of optical discs, there are CD-ROM, CD-Audio, CD-Video, CD-R and CD-RW. As for a recording density, a BD has the highest recording density, and a DVD and CD have lower recording densities in this order.

(Thicknesses of protective substrates)

Thicknesses t1, t2, and t3 of the protective substrates preferably satisfy the following conditional expressions (3), (4), and (5). However, the thicknesses are not limited to them.

$$0.05 \, \text{mm} \le t1 \le 0.13 \, \text{mm} \quad (3)$$

$$0.5 \, \text{mm} \le t2 \le 0.7 \, \text{mm} \quad (4)$$

$$1.0 \, \text{mm} \le t3 \le 1.3 \, \text{mm} \quad (5)$$

(Light sources)

As a light source, a laser such as a semiconductor laser and a silicon laser is preferably used. The first wavelength $\lambda 1$ of the first light flux emitted from the first light source, the second wavelength $\lambda 2$ ($\lambda 2 > \lambda 1$) of the second light flux emitted from the second light source, the third wavelength $\lambda 3$ ($\lambda 3 > \lambda 2$) of the third light flux emitted from the third light source, are preferable to satisfy the following conditional expressions (6) and (7).

(Laser wavelengths)

$$1.5 \times \lambda 1 < \lambda 2 < 1.7 \times \lambda 1 \qquad (6)$$

$$1.9 \times \lambda 1 < \lambda 3 < 2.1 \times \lambda 1 \qquad (7)$$

When a BD, DVD, and CD are employed as the first optical disc, the second optical disc, and the third optical disc, respectively, the wavelength $\lambda 1$ of the first light source is 500 nm or less, is preferably 350 nm or more, and 440 nm or less, and is more preferably 380 nm or more, and 420 nm or less; the second wavelength $\lambda 2$ of the second light source is preferably 570 nm or more, and 680 nm or less, and is more preferably 630 nm or more, and 670 nm or less; and the third wavelength $\lambda 3$ of the third light source is preferably 750 nm or more, and 880 nm or less, and is more preferably 760 nm or more, and 820 nm or less.

(Unitization)

Further, at least two light sources of the first light source, the second light source, and the third light source may be unitized. The unitization means fixing and housing, for example, the first light source and the second light source into one package. However it is not limited to the above, the unitization in a broad sense involves a situation that two light sources are fixed so that aberration can not be corrected. Further, in addition to the light source, the light-receiving element which will be described later, may also be provided as one package.

(Light-receiving element)

As a light-receiving element, a photo detector such as a photo diode is preferably used. Light reflected on an information recording surface of an optical disc enters into the light-receiving element, and outputted signal from the light-receiving element is used for obtaining read-out signal of information recorded in each optical disc. Further, a change in the light amount caused by a change in shape and a change in position of the spot on the light-receiving element, are detected to conduct the focus detection and the tracking detection focus detection. Based on these detections, the objective lens can be moved for focusing and tracking operations. The light-receiving element may be composed of a plurality of photo detectors. The light-receiving element may also have a main photo detector and secondary photo detector. For example, the light-receiving element is provided with a main photo detector which receives the main light used for recording and/or reproducing information, and two secondary photo detectors positioned on both sides of the main photo detector, so as to receive secondary light for tracking adjustment by the two secondary photo detectors. Further, the light-receiving element may also comprise a plurality of light-receiving elements corresponding to respective light sources.

(Light-converging optical system)

The optical pickup apparatus according to the present invention comprises an objective lens. The optical pickup apparatus may further comprise a beam splitter, additionally to the objective lens. The beam splitter is an optical element for splitting a light flux into two or more light fluxes. The optical pickup apparatus may further comprise a coupling lens such as a collimation lens other than the objective lens. The coupling lens is arranged between the objective lens and the light source and is a single lens or a lens group which changes divergent angle of a light flux. The collimation lens is a kind of coupling lens and is a lens to collimate a light flux which has entered the collimation lens. Further, the optical pickup apparatus may also comprise an optical element such as a diffractive optical element which divides a light flux emitted from a light source into a main light flux used for recording reproducing information and two secondary light fluxes used for operations such as a tracking operation. The optical pickup apparatus may comprises a quarter-wave plate and a stop in an optical path of a light flux emitted from the light source. The quarter-wave plate is an optical element which converts light which has passed through the collimation lens from a linear polarization light to a circular polarization light The stop is an optical element which limits a light flux to a predetermined numerical aperture.

(Objective lens)

In the present specification, an objective lens is an optical element having a positive refractive power, for converging a light flux traveling from the light source onto an information recording surface through a protective substrate of the optical disc. It is preferable that the objective lens is arranged at a position facing the optical disc. Further, it is preferable that the objective lens is displacable at least in the direction of the optical axis integrally as one body by using an actuator. The objective lens may be composed of two or more lenses or optical elements, or may be a single-element objective lens. However, the objective lens composed of a single lens is preferable.

The objective lens is a plastic lens, and can be a refractive lens including only refractive surfaces or a diffractive lens including a diffractive structure for realizing compatibility of different optical discs. When the objective lens does not include a diffractive structure for correcting spherical aberration which is caused by temperature change, the present invention is effective more significantly, because such the situation increases a possibility that a the magnification of the objective lens needs to be changed in order to correct the spherical aberration caused corresponding to that temperature change.

Further, the objective lens preferably includes a flange section at the periphery, where the flange section includes a surface extending in a direction perpendicular to the optical axis. The objective lens can be mounted on an optical pickup apparatus accurately by using the flange section.

(Numerical aperture of objective lens)

NA1 represents the image side numerical aperture of the objective lens, necessary for reproducing and/or recording information for the first optical disc. NA2 (NA1 > NA2) represents that the image side numerical aperture of the objective lens necessary for reproducing and/or recording for the information to the second optical disc. NA3 (NA2 > NA3) represents that the image side numerical aperture of the objective lens necessary for reproducing and/or recording information for the third optical disc. NA1 is 0.7 or more, and is preferably 0.8 or more and 0.9 or less. Especially, NA1 is more preferably 0.85. NA2 is preferably 0.55 or more, and is 0.7 or less. Especially, NA2 is more preferably 0.60. NA3 is preferably 0.4 or more, and is 0.55 or less. Especially, NA3 is more preferably 0.45 or 0.53.

Spherical aberration of a spot formed on an information recording surface of an optical disc depends on numerical aperture NA of the objective lens and wavelength $\lambda$ of the light source, and increases in proportion to $NA^4/\lambda$. Therefore, when the numerical aperture of the objective lens is increased and a wavelength of the light source is shortened for making the optical disc high density, the spherical aberration resulting from a temperature change increases, which increases a possibility that the magnification of the objective lens needs to be changed in order to correct the spherical aberration for obtaining a stable information recording/representing characteristics. Therefore, when the numerical aperture is 0.7 or more (preferably, 0.8 or more), the present invention is effective more significantly.

(Material of objective lens)

When the objective lens of the optical pickup apparatus relating to the present invention, is made of a plastic material, the spherical aberration resulting from a temperature change becomes larger, which increases a possibility that the magnification of the objective lens needs to be changed in order to correct the spherical aberration for obtaining a stable information recording/representing characteristics. Therefore, when the objective lens is a plastic lens, the present invention exhibits its effect more significantly. Alternatively, under the condition that the objective lens is a glass lens, there is a possibility that the magnification of the objective lens needs to be changed when it handles a multilayered optical disc or wavelength fluctuation. Accordingly, such the objective lens can also gain the benefit of the present invention.

(Manufacturing method of lens)

The method of manufacturing lens is not limited in special. For example, there can be employed known methods such as the injection molding method, compressive molding method, micromolding method, floating-mold method, and Rolinks method. From the viewpoint of ease of the productivity, the injection molding method is preferable.

(Property of objective lens)

The objective lens satisfies the following expression (1).

$$1.0 < |LTR3| / |DTR3| \qquad (1)$$

In the expression, LTR3 represents the third-order coma caused when the objective lens is tilted at a unit angle, the optical disc is not tilted, and a parallel light flux enters the objective lens, and DTR3 represents the third-order coma caused when the objective lens is not tilted, the optical disc is tilted at a unit angle, and a parallel light flux enters the objective lens. Because the amount of generation of the third-order coma has a relationship in proportion to the tilt angle, it is not required to set the tilt angle to a predetermined value. However, for the convenience in a measurement process, the unit angle may be set to 0.5°, for example.

It is preferable that the following expression (1') is satisfied.

$$1.1 \le |LTR3|/|DTR3| \le 2.0 \qquad (1')$$

It is preferable that the following expression (1A) is satisfied.

$$0.4 \le |LTR3(+)|/|DTR3(+)| \le 1.2 \qquad (1A)$$

In the expression, LTR3(+) is a third-order coma caused when the objective lens is tilted at a unit angle and the optical disc is not tilted, under a condition that spherical aberration resulting from a magnification correction of the objective lens is corrected to be minimum, in an optical system which causes a spherical aberration or+0.20 $\lambda$rms or more in comparison with an optical system in the reference condition, and DTR3(+) is a third-order coma caused when the objective lens is not tilted and the optical disc is tilted at a unit angle, under a condition that a spherical aberration resulting from a magnification correction of the objective lens is corrected to be minimum, in an optical system which causes a spherical aberration of+0.20$\lambda$rms or more in comparison with an optical system in the reference condition. "The optical system which causes a spherical aberration of+0.20 $\lambda$rms or more in comparison with an optical system in the reference condition" is preferably an optical system under the condition that the temperature is higher and the protective substrate is thicker in comparison with the optical system in the reference condition. For example, the optical system in the reference condition may be assumed to be an optical system under the condition that the temperature is the room air temperature and the intermediate value of the two information recording surfaces of a two-layer optical disc is assumed to be a thickness of a virtual protective substrate. The optical system which causes a spherical aberration of+0.20 $\lambda$rms or more may be assumed to be an optical system under the condition that the temperature is higher by 40°C than the reference condition and that the thickness of the protective substrate is the distance to the information recording surface at the deeper position out of two information recording surfaces of the two-layer optical disc.

It is preferable that the following expression (2) is satisfied at any position within the effective diameter of the objective lens.

$$-0.02 \le OSC \le 0.01 \qquad (2)$$

In the expression, an amount of offense against a sine condition OSC is represented by OSC = (sin $\alpha$ / sin $\alpha$'-ml), where $\alpha$ is an incident angle of a ray entering an arbitral position within an effective aperture of the objective lens, with an optical axis, $\alpha$ is an outgoing angle of the ray with the optical axis formed when the ray outgoes from the objective lens, and ml is a magnification of the objective lens when information is recorded or reproduced for the optical disc.

It is preferable that the objective lens satisfies the following conditional expression.

$$0.007 < |N - P| / (M \times 2 \times \Delta T) < 0.028$$

In the expression, M is the third-order coma caused when the objective lens is tilted by 1° at temperature T (°C), N is the third-order coma caused when the objective lens is tilted by 1° at temperature T + $\Delta$T (°C), and P is the third-order coma caused when the objective lens is tilted by 1° at temperature T - $\Delta$T (°C). Herein, the values M, N, and P are the values obtained under the condition that the magnification of the objective lens is changed with a spherical-aberration-correction element in order to make the third order spherical aberration on the optical disc zero.

The focal length of the objective lens preferably satisfies the following expression.

$$1.0 \le f(mm) \le 2.4$$

When the focal length of the objective lens is long, the generation of coma becomes large when the magnification of the objective lens which is obtained after the skew adjustment is changed for the spherical aberration correction. Accordingly, when the lower limit of the above conditional expression is satisfied, it can be said that the problem of the present invention becomes greater, and that the present invention is effective more significantly. The following condition is satisfies more preferably.

$$1.2 \leq f(mm) \leq 2.2$$

(Mounting of objective lens)

When the objective lens is mounted on the optical pickup apparatus, it is preferable that the skew adjustment is carried out and the objective lens is mounted to be tilted in order to correct residual coma of the objective lens caused in a manufacturing process. More concretely, it is preferable that the objective lens is mounted on the optical pickup apparatus such that the optical axis of the objective lens (a line perpendicular to a tangential surface on the apex of the optical surface of the objective lens) is tilted with respect to the optical axis of the optical pickup apparatus (the optical axis of a ray traveling from the light source). When the objective lens is mounted under such the condition, coma is caused resulting from a magnification change of the objective lens, which enlarges the problem of the present invention and makes the effect of the present invention significant. In other words, it can be represented such that the optical axis of the objective lens is tilted with respect to a reference axis of the optical pickup apparatus which extends from the light source to the optical disc and involves the optical axis of a spherical-aberration-correction means which will be described later.

(Spherical-aberration-correction means)

The optical pickup apparatus relating to the present invention preferably includes a spherical-aberration-correction means arranged in an optical path of a light flux emitted from the light source, for correcting a spherical aberration resulting from a temperature change.

It is preferable that the spherical-aberration-correction means corrects spherical aberration resulting from the thicknesses of the protective substrates arranged before the information recording surfaces in different types of optical discs, spherical aberration resulting from the thicknesses of the protective substrates arranged before the information recording surfaces in a multilayered optical disc, and spherical aberration resulting from wavelength change, in addition to the spherical aberration resulting from temperature change. More preferably, a spherical-aberration-correction means for correcting spherical aberration resulting from temperature change, also corrects spherical aberration resulting from thicknesses of protective substrates arranged before the information recording surfaces in an optical disc including plural information recording surfaces arranged in the thickness direction. As for a BD, an optical disc including two information recording surfaces is popular, and many of the optical pickup apparatuses include a spherical-aberration-correction means for correcting spherical aberration resulting from thicknesses of the protective substrates arranged before the respective information recording surfaces of a BD. By combining a means for correcting spherical aberration resulting from temperature change and the sphencal-aberration-correction means employed in such the optical pickup apparatus for a BD for correcting spherical aberration resulting form the thicknesses of the protective substrates arranged before the information recording surfaces, a plastic objective lens can be used without changing the construction of the conventional optical pickup apparatus, which is a very preferable embodiment. The temperature change is sensed by a temperature sensor such as a thermistor.

The spherical-aberration-correction means can preferably correct also spherical aberration resulting from at least one of a humidity change and an error in thickness of the protective substrate of the optical disc.

As described above, by providing the above-described spherical-aberration-correction means for correcting the above spherical aberration, in the optical path of a light flux emitted from the light source, stable information recording/reproducing characteristics can be obtained.

(Lens movement in the optical axis direction)

As an example of a spherical-aberration-correction means, there is cited a structure to correct spherical aberration by moving a lens or a lens group arranged in an optical path between the light source and the objective lens, to change a divergent angle of a light flux entering the objective lens.

As an example of changing the divergent angle of a light flux entering the objective lens by moving a lens or a lens group arranged in the optical path between the light source and the objective lens, in a direction of the optical axis, there is cited a structure which includes a positive lens with a positive refractive power at a position between the light source and the objective leans for receiving a divergent light emitted from the light source. In the structure, a divergent angle of a light flux entering the objective lens is changed by moving the positive lens in the direction of the optical axis.

As such the positive lens, there are preferably used a collimation lens for converting a divergent light flux emitted from the light source into a parallel light flux, and for guiding the light flux to the objective lens; and a coupling lens for changing the degree of divergence of the divergent light flux emitted from the light source and for guiding the light to the objective lens.

Further, as another example that the divergent angle of a light flux entering the objective lens is changed by moving a lens or a lens group arranged in an optical path between the light source and the objective lens in the direction of the optical axis, there is cited a structure which includes a positive lens with a positive refractive power at a position between the light source and the objective lens for receiving a divergent light emitted from the light source, and a negative lens with a negative refractive power at a position between the positive lens and the objective lens. In the structure, the negative lens is moved in the direction of the optical axis to change the degree of divergence of a light flux entering the objective lens.

As the positive lens with a positive refractive power and the negative lens with a negative refractive power, a beam expander is preferably used.

As a spherical-aberration-correction means which moves a lens or a lens group in the optical axis direction is not limited to the above-described examples. The spherical-aberration-correction means includes a positive lens and a negative lens, but it can involve that an embodiment that the positive lens is moved, and an embodiment that it includes a relay lens composed of two positive lenses in which parallel light enters one of two positive lenses and the one of positive lenses is moved. Herein, a coupling lens involves an element such as a beam expander and relay lens.

As an actuator for driving the above lens in the direction of the optical axis, there can be used an actuator such as a stepping motor, voice coil actuator, and an actuator employing a piezoelectric element.

When a lens which is displacable in the direction of the optical axis is used as a spherical-aberration-correction means, spherical aberration can be corrected in proportion to the displacement amount of that in the direction of the optical axis, which exhibits a merit that the range of spherical aberration correction becomes broad. Further, when a lens which is displacable in the direction of the optical axis is used as a spherical-abernation-correction means, the magnification of the objective lens changes, which enlarges the problem of the present invention and results in the significant effect of the present invention.

(Optical information recording and reproducing apparatus)

The optical information recording and reproducing apparatus according to the present invention, includes the optical disc drive apparatus having the above described optical pickup apparatus.

Herein, the optical disc drive apparatus installed in the optical information recording and reproducing apparatus will be described. There is provided an optical disc drive apparatus employing a system of taking only a tray which can hold an optical disc under the condition that the optical disc is mounted thereon, outside from the main body of the optical information recording and reproducing apparatus in which optical pickup apparatus is housed; and a system of taking out the main body of the optical disc drive apparatus in which the optical pickup apparatus is housed.

The optical information recording and reproducing apparatus using each of the above described systems, is generally provided with the following component members but the members are not limited to them: an optical pickup apparatus housed in a housing; a drive source of the optical pickup apparatus such as seek-motor by which the optical pickup apparatus is moved toward the inner periphery or outer periphery of the optical disc for each housing; traveling means having a guide rail for guiding the optical pickup apparatus toward the inner periphery or outer periphery of the optical disc; and a spindle motor for rotation driving of the optical disc.

The optical information recording and reproducing apparatus employing the former system is provide with, other than these component members, a tray which can hold the optical disc with the optical disc being mounted thereon, and a loading mechanism for slidably moving the tray. The optical information recording and reproducing apparatus employing the latter system does not include the tray and loading mechanism, and it is preferable that each component member is provided in the drawer corresponding to chassis which can be taken out outside.

**ADVANTAGEOUS EFFECT OF INTENTION**

As described above, the present invention can provide an optical pickup apparatus which can record/reproduce information properly when temperature changes, a multilayered disc is used, or wavelength changes, and can provide an objective lens for used in the same.

**BRIEF DESCRIPTION OF DRAWINGS**

Fig. 1 is a diagram for explaining the present invention.

Fig. 2 is a schematic construction diagram of an optical pickup apparatus in the present embodiment.

Fig. 3a is a longitudinal spherical aberration diagram of Example 1, and the vertical axis represents a height from the optical axis, while, the horizontal axis represents an amount of spherical aberration (mm). Fig. 3b is a diagram showing an amount of offense against the sine condition, and the vertical axis represents a height from the optical axis and the horizontal axis represents an amount of offence against the sine condition (mm).

Fig. 4 is a graph showing sensitivity of a lens tilt in Example 1.

Fig. 5a is a longitudinal spherical aberration diagram of Example 2, and the vertical axis represents a height from the optical axis, while, the horizontal axis represents an amount of spherical aberration (mm). Fig. 5b is a diagram showing an amount of offense against the sine condition of Example 2, and the vertical axis represents a height from an optical axis, while, the horizontal axis represents an amount of offense against the sine condition (mm).

Fig. 6 is a graph showing sensitivity of a lens tilt in Example 2.

**DESCRIPTION OF EMBODIMENTS**

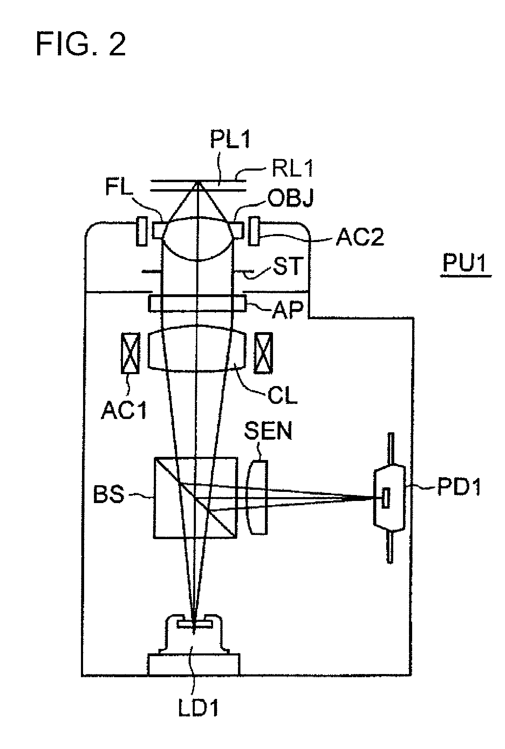

An embodiment of the present invention will be explained as follows, referring to the drawings. Fig. 2 is a diagram showing schematically constitution of an optical pickup apparatus that can record/reproduce information appropriately for a BD. Optical pickup apparatus PU1 of this kind can be loaded on an optical information recording and reproducing apparatus. Incidentally, the present invention is not limited to the present embodiment

The optical pickup apparatus PU1 includes therein objective lens OBJ, stop ST, quarter-wave plate AP, collimation lens CL, beam-splitter BS, cylindrical lens SEN, semiconductor laser LD1 (light source) emitting a laser light flux with wavelength of 405 nm, light-receiving element PD1 that receives a light flux reflected from information recording surface RL1 of a BD, and uniaxial actuator AC1 that moves a collimation lens in the direction of the optical axis. Incidentally, the objective lens is made of resin, and has optical surfaces composed of refractive surfaces on which no diffraction structure is provided.

Further, objective lens OBJ includes, on its outer periphery, flange section FL having a surface extending in the direction perpendicular to the optical axis. In the case of assembling, it is possible to tilt objective lens OBJ with respect to the optical pickup apparatus and to attach the objective lens OBJ thereon accurately by this flange section FL, for eliminating residual coma.

In objective lens OBJ, prescribed numerical aperture at the image side that is needed to record and/or reproduce information on information recording surface RL is 0.7 or more, and the following expressions (1) and (1A) are satisfied.

$$1.0 < |\mathrm{LTR3}| / |\mathrm{DTR3}| \qquad (1)$$

In the aforesaid expression, LTR33 is a third-order coma caused when the objective lens is tilted at a unit angle, the optical disc is not tilted, and a parallel light flux enters the objective lens, and DTR3 is a third-order coma caused when the objective lens is not tilted, the optical disc is tilted at a unit angle, and a parallel light flux enters the objective lens.

$$0.4 \leq |\mathrm{LTR3}(+)| / |\mathrm{DTR3}(+)| \leq 1.2 \qquad (1A),$$

In the aforesaid expression, LTR3(+) is a third-order coma caused when the objective lens is tilted at a unit angle and the optical disc is not tilted, under a condition that spherical aberration resulting from a magnification correction of the objective lens is corrected to be minimum, in an optical system which causes a spherical aberration of +0.20 $\lambda$rms or more in comparison with an optical system in a reference condition, and DTR3(+) is a third-order coma caused when the objective lens is not tilted and the optical disc is tilted at a unit angle, under a condition that a spherical aberration resulting from a magnification correction of the objective lens is corrected to be minium, in an optical system which causes a spherical aberration of +0.20 $\lambda$rms or more in comparison with an optical system in a reference condition.

A divergent light flux ($\lambda$1 = 405 nm) emitted from blue-violet semiconductor laser LD1 passes through beam splitter BS and collimation lens CL forms the light flux into a parallel light flux. After that, quarter-wave plate AP converts the light flux from a linear polarization light to a circular polarization light, and stop SP regulates the diameter of the resulting light flux. Then, objective lens OBJ forms the light flux into a spot on information recording surface RL1 of a BD through protective layer PL1 with a thickness of 0.1 mm.

The reflection light flux which is modulated on the information recording surface RL1 by information pits, passes through objective lens OBJ and stop ST again, and is converted from circular polarized light into linear polarized light by quarter-wave plate AP. Then, collimation lens CL converts the light flux into a convergent light flux. The convergent light flux is reflected by beam splitter BS and is converged by cylindrical lens SEN on the light receiving surface of a light-receiving surface of light-receiving element PD1. Then, information recorded in a BD can be read based on the output signal of the first light-receiving element PD1, by focusing or tracking objective lens OBJ using two-axis actuator AC2.

When temperature changes, spherical aberration increases corresponding to refractive index change in objective lens OBJ. Therefore, collimation lens CL is moved in the direction of the optical axis with uniaxial actuator AC1, to make a finite light flux enter objective lens OBJ, whereby the spherical aberration is controlled. When a BD is a multilayer disc, spherical aberration also increases at a time of carrying out an interlayerjump from one layer to another in a plurality ofinfonnation recording surfaces. Therefore, collimation lens CL is moved in the direction of the optical axis corresponding to the increase. In the present embodiment, the tilt sensitivity of objective lens OBJ is increased to handle that. Thereby, the occurrence of the third-order coma is effectively controlled even when a finite light flux enters objective lens OBJ under the condition that the objective lens is mounted with tilted for correcting the residual coma.

## EXAMPLES

Next, an example of an appropriate objective lens suitable for an optical pickup apparatus relating to the present embodiment will be explained.

Incidentally, from now on, the power of 10 (for example, $2.5 \times 10^{-3}$) is expressed by "E" (for example, 2.5E-3).

Further, an optical surface of an objective optical element in the present embodiment is is formed to be an aspheric surface that is stipulated by the numerical expression in which a coefficient shown in a table is substituted, and is formed to be on an axially symmetric basis on an optical axis. Herein, K represents a conic constant and $A_{2i}$ represents an aspheric surface coefficient

[Math. 1]

$$X = \frac{h^2/r}{1 + \sqrt{1 - (1+K)h^2/r^2}} + \sum_{i=2}^{10} A_{2i}h^{2i}$$

(Example 1)

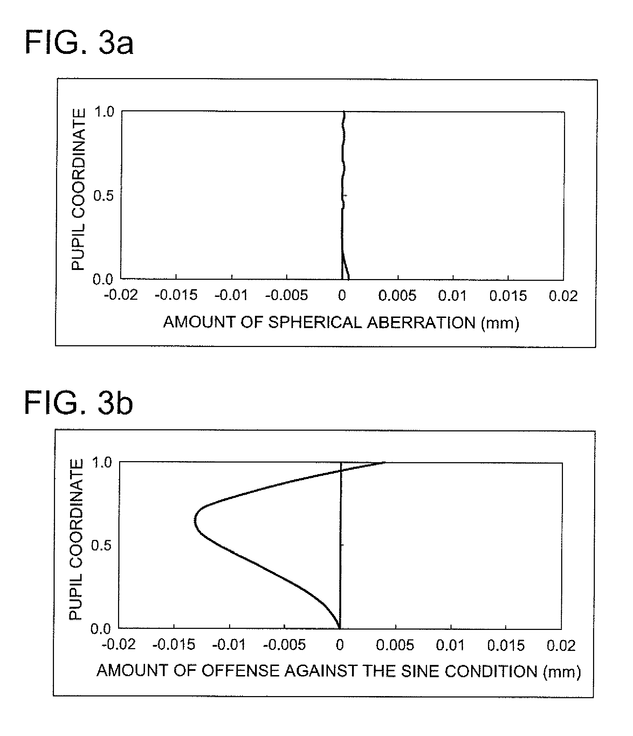

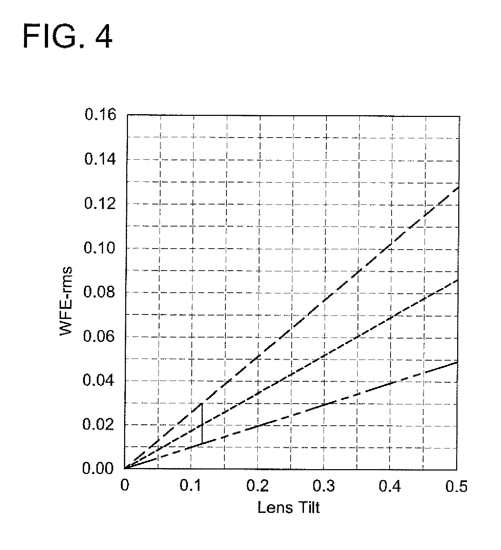

Table 1 shows lens data in Example 1 of an objective lens. Fig. 3a is a diagram showing a longitudinal spherical aberration diagram of Example 1 $(\lambda = 405$ nm), and Fig. 3b is a diagram showing the amount ofoffense against the sine condition of Example 1 ($\lambda$ = 405 nm). Incidentally, pupil coordinate 1.0 corresponds to NA 0.85. Fig. 4 is a graph showing sensitivity of a lens tilt in Example 1. A solid line, dotted line and two-dot chain line in Fig. 4 are as lines explained in Fig. 1. In the present Example, |ILTR3| / |DTR3|= 1.8 and |LTR3 (+)|/ |DTR3 (+)|= 0.9 hold. With respect to the amount of offense against the sine condition OSC, the smallest value is -0.013 and the greatest value is 0.005. Herein, the magnification that minimizes the deterioration of spherical aberration resulting from temperature changes and difference ofthicknesses of protective substrates was calculated under the condition shown in Table 2, on the condition that refractive index change resulting from temperature of a material of an objective lens dn/dT is $-9 \times 10^{-5}$, and wavelength fluctuation resulting from temperature change of semiconductor laser d$\lambda$/dT is 0.05 nml°C. As is shown in Fig. 4, if an optical axis of the objective lens is tilted by at most 0.12 degree with respect to the incident light, the third-order coma becomes to be zero, in the case of making a parallel light flux enter the objective lens under the temperature condition of 35°C and in the case of converging light onto an information recording surface of a virtual optical disc having a thickness of a protective substrate of 0.0875 mm that is a design reference. Herein, the third-order coma caused when light is converged on an information recording surface of the first layer whose protective substrate thickness is 0.075 mm under the temperature condition of -10°C is 0.01 $\lambda$nms that is within a permissible range.

Table 1

f=1.412 mm

NA:0.85

| i th surface | r(mm) | d(mm) | n(405nm) | |
|---|---|---|---|---|
| 0 | | ∞ | | |
| 1 | ∞ | 0.0 | 1.0 | Stop diameter φ 2.40 mm |
| 2 | 0.93970 | 1.75 | 1.55923 | |
| 3 | -1.64029 | 0.41418 | 1.0 | |
| 4 | ∞ | 0.0875 | 1.62230 | |
| 5 | ∞ | | | |

Aspheric surface coefficient

| | 2nd surface | 3rd surface |
|---|---|---|
| κ | -5.7335E-01 | -3.4131E+01 |
| A4 | 1.7235E-02 | 2.7860E-01 |
| A6 | -2.1112E-02 | -5.7918E-01 |
| A8 | 7.7776E-02 | 9.9016E-01 |
| A10 | -1.1795E-01 | -1.4660E+00 |
| A12 | 6.3916E-02 | 1.4310E+00 |
| A14 | 7.4653E-02 | -7.7351E-01 |
| A16 | -1.4234E-01 | 1.7335E-01 |
| A18 | 8.8068E-02 | 0.0000E+00 |
| A20 | -2.0159E-02 | 0.0000E+00 |

Table 2

| Temperature (°C) | -10 | 35 | 75 |
|---|---|---|---|
| Disc thickness (mm) | 0.075 | 0.0875 | 0.1 |
| Magnification | 1/73 | 0 | -1/90.9 |

(Example 2)

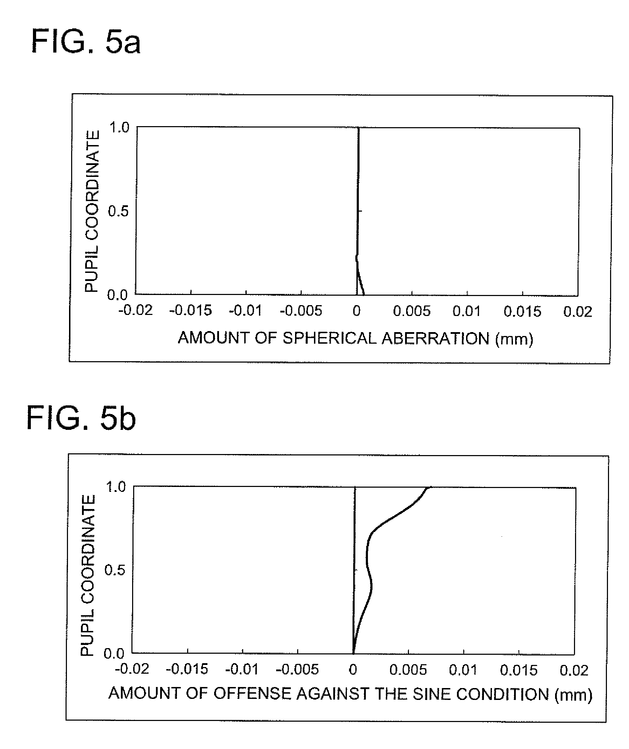

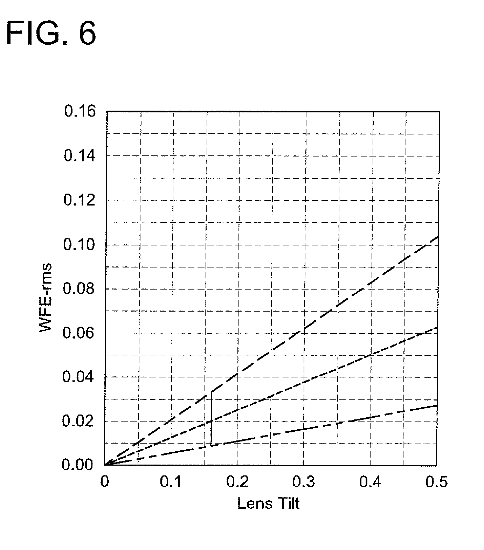

Table 3 shows lens data in Example 2 of an objective lens. Fig. 5a is a diagram showing a longitudinal spherical aberration diagram of Example 2 ($\lambda$= 405 nm), and Fig. 5b is a diagram showing the amount of the offense against the sine condition of Example 2 ($\lambda$= 405 nm). Incidentally, pupil coordinates 1.0 corresponds to NA 0.85. Fig. 6 is a graph showing sensitivity of a lens tilt in Example 1. A solid line, dotted line and two-dot chain line in Fig. 6 are as lines explained in Fig. 1. In the present Example, |LTR3| / |DTR3| is 1.3 and |LTR3 (+)| /|DTR3 (+)| is 0.5 hold. With respect to the amount of offense against the sine condition OSC, the smallest value is 0 and the greatest value is 0.007, Herein, the magnification that minimizes the deterioration of spherical aberration resulting from temperature changes and difference of thicknesses of protective substrates was calculated under the conditions shown in Table 4, on the condition that refractive index change by temperature of a material of an objective lens dn/dT is $-9 \times 10^{-5}$, and wavelength fluctuation by temperature change of semiconductor laser d$\lambda$/T is 0.05 nm/°C. As is shown in Fig. 6, if an optical axis ofthe objective lens is tilted by at most 0.16 degree with respect to the incident light, the third-order coma becomes to be zero, in the case of making a parallel light flux enter the objective lens under the temperature condition of 35°C and in the case of converging light onto an information recording surface of a virtual optical disc having a thickness of a protective substrate of 0.0875 mm that is a design reference. Herein, the third-order coma caused when light is converged on an information recording surface of the first layer whose protective substrate thickness is 0.075 mm under the temperature condition of -10°C is 0.012 $\lambda$ms that is within a permissible range.

Table 3

f=1.412 mm

NA:0.85

| i-th surface | r(mm) | d(mm) | n(405nm) | |
|---|---|---|---|---|
| 0 | | ∞ | | |
| 1 | ∞ | 0.0 | 1.0 | Stop diameter φ2.40mm |
| 2 | 0.94541 | 1.75 | 1.55923 | |
| 3 | -1.60911 | 0.42005 | 1.0 | |
| 4 | ∞ | 0.0875 | 1.62230 | |
| 5 | ∞ | | | |

Aspheric surface coefficient

| | 2nd surface | 3rd surface |
|---|---|---|
| κ | -6.1497E-01 | -4.4351E+01 |
| A4 | 2.6465E-02 | 2.7616E-01 |
| A6 | -1.4098E-02 | -5.6251E-01 |
| A8 | 7.2423E-02 | 9.8734E-01 |
| A10 | -1.0973E-01 | -1.4914E+00 |
| A12 | 6.2819E-02 | 1.4254E+00 |
| A14 | 7.3136E-02 | -7.1344E-01 |
| A16 | -1.4194E-01 | 1.3654E-01 |
| A18 | 8.8567E-02 | 0.0000E+00 |
| A20 | -2.0147E-02 | 0.0000E+00 |

Table 4

| Temperature (°C) | -10 | 35 | 75 |
|---|---|---|---|
| Disc thickness (mm) | 0.075 | 0.0875 | 0.1 |
| Magnification | 1/87.7 | 0 | -1/108.7 |

**REFERENCE SIGNS LIST**

AC1    Uniaxial actuator
AC2    Biaxial actuator
AP     Quarter-wave plate
BS     Beam splitter
CL     Collimation lens
DP     Dichroic prism
FL      Flange section
LD1    Blue-violet semiconductor laser
OBJ   Objective lens
PD1   Light-receiving element
PL1    Protective substrate
PU1   Optical pickup apparatus
RL1    Information recording surface
SEN   Cylindrical lens
ST     Stop

**Claims**

1. An objective lens for an optical pickup apparatus for recording and/or reproducing information for an optical disc, the optical pickup apparatus comprising a light source for emitting a light flux with a wavelength λ1 of 500 nm or less, an objective lens for converging a light flux traveling from the light source onto an information recording surface of the optical disc through a protective layer with a thickness t1, and a light-receiving element for receiving a light flux which has been reflected on the information recording surface and has passed through the objective lens, the objective lens **characterized in that**
a predetermined numerical aperture at an image side which is necessary for recording and/or reproducing information for the optical disc is 0.7 or more, and
the objective lens satisfies the following expression, where LTR3 is a third-order coma caused when the objective lens is tilted at a unit angle, the optical disc is not tilted, and a parallel light flux enters the objective lens, and DTR3 is a third-order coma caused when the objective lens is not tilted, the optical disc is tilted at a unit angle, and a parallel light flux enters the objective lens:

$$1.0 < |LTR3|/|DTR3| \qquad (1).$$

2. The objective lens of claim 1, **characterized by** satisfying the following expression:

$$1.1 \leq |LTR3|/|DTR3| \leq 2.0 \qquad (1').$$

3. The objective lens of claim 1 or 2, **characterized by** satisfying the following expression,
where LTR3(+) is a third-order coma caused when the objective lens is tilted at a unit angle and the optical disc is not tilted, under a condition that spherical aberration resulting from a magnification correction of the objective lens is corrected to be minimum, in an optical system which causes a spherical aberration of +0.20 λrms or more in comparison with an optical system in a reference condition, and
DTR3(+) is a third-order coma caused when the objective lens is not tilted and the optical disc is tilted at a unit angle, under a condition that a spherical aberration resulting from a magnification correction of the objective lens is corrected to be minimum, in an optical system which causes a spherical aberration of +0.20 λrms or more in comparison with an optical system in a reference condition:

$$0.4 \leq |LTR3(+)|/|DTR3(+)| \leq 1.2 \qquad (1A).$$

4. The objective lens of any one of claims 1 to 3, **characterized in that**
an amount of otiose against a sine condition OSC is represented by OSC = (sin α / sin α'-ml), where α' is an incident angle of a ray with an optical axis, the ray entering an arbitral position within an effective aperture of the objective lens, and α is an outgoing angle of the ray with the optical axis formed when the ray outgoes from the objective lens, and the amount of offense against the sine condition OSC satisfies the following expression at any position within the effective aperture of the objective lens, where ml is a magnification of the objective lens when information is recorded or reproduced for the optical disc:

$$-0.02 \leq OSC \leq 0.01 \qquad (2)$$

5. The objective lens of any one of claims 1 to 4, **characterized in that** the objective lens comprises an optical surface formed of a refractive surface.

6. The objective lens of any one of claims 1 to 4, **characterized in that** the objective lens comprises an optical surface including a diffractive structure.

7. The objective lens of any one of claims 1 to 6, **characterized in that** the objective lens is made of plastic.

8. An optical pickup apparatus for recording and/or reproducing information for an optical disc, the optical pickup apparatus **characterized by** comprising:

a light source for emitting a light flux with a wavelength $\lambda 1$ of 500 nm or less,
an objective lens for converging a light flux traveling from the light source onto an information recording surface of the optical disc through a protective layer with a thickness t1, and
a light-receiving element for receiving a light flux which has been reflected on the information recording surface and has passed through the objective lens,
wherein a predetermined numerical aperture at an image side which is necessary for recording and/or reproducing information for the optical disc is 0.7 or more, and
the objective lens satisfies the following expression, where LTR3 is a third-order coma caused when the objective lens is tilted at a unit angle, the optical disc is not tilted, and a parallel light flux enters the objective lens, and DTR3 is a third-order coma caused when the objective lens is not tilted, the optical disc is tilted at a unit angle, and a parallel light flux enters the objective lens:

$$1.0 < |LTR3|/|DTR3| \qquad (1).$$

9. The optical pickup apparatus of claim 8, **characterized by** satisfying the following expression:

$$1.1 \leq |LTR3|/|DTR3| \leq 2.0 \qquad (1').$$

10. The optical pickup apparatus of claim 8 or 9, **characterized by** satisfying the following expression,
where LTR3(+) is a third-order coma caused when the objective lens is tilted at a unit angle and the optical disc is not tilted, under a condition that spherical aberration resulting from a magnification correction of the objective lens is corrected to be minimum, in an optical system which causes a spherical aberration of+0.20 $\lambda$rms or more in comparison with an optical system in a reference condition, and
DTR3(+) is a third-order coma caused when the objective lens is not tilted and the optical disc is tilted at a unit angle, under a condition that a spherical aberration resulting from a magnification correction of the objective lens is corrected to be minimum, in an optical system which causes a spherical aberration of+0.20 $\lambda$rms or more in comparison with an optical system in a reference condition:

$$0.4 \leq |LTR3(+)|/|DTR3(+)| \leq 1.2 \qquad (1A).$$

11. The optical pickup apparatus of any one of claims 8 to 10, **characterized in that**
an amount of offense against a sine condition OSC is represented by OSC = (sin $\alpha$ / sin $\alpha$'-ml), where $\alpha$ is an incident angle of a ray with an optical axis, the ray entering an arbitral position within an effective aperture of the objective lens, and $\alpha$ is an outgoing angle of the ray with the optical axis fonned when the ray outgoes from the objective lens, and the amount of offense against the sine condition OSC satisfies the following expression at any position within the effective aperture of the objective lens, where ml is a magnification of the objective lens when information is recorded or reproduced for the optical disc:

$$-0.02 \leq OSC \leq 0.01 \qquad (2)$$

12. The optical pickup apparatus of any one of claims 8 to 11, **characterized in that**
the objective lens comprises an optical surface formed of a refractive surface.

13. The optical pickup apparatus of any one of claims 8 to 11, **characterized in that**
the objective lens comprises an optical surface including a diffractive structure.

14. The optical pickup apparatus of any one of claims 8 to 13, **characterized by** further comprising a coupling lens arranged at a position between the light source and the objective lens and being displacable in the direction of an optical axis,

wherein the optical pickup apparatus corrects a spherical aberration caused in an optical system including the coupling lens and the objective lens, by displacing the coupling lens in the direction of the optical axis.

15. The optical pickup apparatus of claim 14, **characterized in that**
the optical pickup apparatus corrects a spherical aberration caused in the optical system resulting from a temperature change, by displacing the coupling lens in the direction of the optical axis.

16. The optical pickup apparatus of claim 14 or 15, **characterized in that**
the optical disc comprises a plurality of information recording surfaces, and
the optical pickup apparatus corrects a spherical aberration by displacing the coupling lens in the direction of the optical axis, the spherical aberration being caused when an information recording surface for which information is recorded and/or reproduced is changed to another information recording surface.

17. The optical pickup apparatus of any one of claims 8 to 16, **characterized in that**
the objective lens is mounted in the optical pickup apparatus with an optical axis of the objective lens tilted with respect to an optical axis ofthe optical pickup apparatus.

18. The optical pickup apparatus of any one of claims 8 to 17, **characterized in that**
the objective lens is made of plastic.

FIG. 1a    FIG. 1b    FIG. 1c

21

FIG. 2

# FIG. 3a

# FIG. 3b

# FIG. 4

# FIG. 5a

# FIG. 5b

# FIG. 6

## INTERNATIONAL SEARCH REPORT

International application No.

PCT/JP2009/067404

### A.  CLASSIFICATION OF SUBJECT MATTER
*G11B7/135*(2006.01)i, *G02B13/00*(2006.01)i, *G02B13/18*(2006.01)i, *G11B7/125*(2006.01)i

According to International Patent Classification (IPC) or to both national classification and IPC

### B.  FIELDS SEARCHED

Minimum documentation searched (classification system followed by classification symbols)
G11B7/135, G02B13/00, G02B13/18, G11B7/125

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

### C.  DOCUMENTS CONSIDERED TO BE RELEVANT

| Category* | Citation of document, with indication, where appropriate, of the relevant passages | Relevant to claim No. |
|---|---|---|
| X<br>Y | JP 2007-133967 A  (Canon Inc.),<br>31 May 2007 (31.05.2007),<br>entire text; all drawings<br>& US 2007/0104045 A1 | 1,8<br>2-7,9-18 |
| X<br>Y | JP 2005-108398 A  (Ricoh Co., Ltd.),<br>21 April 2005 (21.04.2005),<br>entire text; all drawings<br>& US 2006/0198254 A1    & EP 1667134 A1<br>& WO 2005/027109 A1    & CN 1871643 A | 1-8<br>2-7,9-18 |
| Y | JP 2007-328886 A  (Konica Minolta Opto, Inc.),<br>20 December 2007 (20.12.2007),<br>paragraph [0012]<br>(Family: none) | 14-16 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>17 November, 2009 (17.11.09) | Date of mailing of the international search report<br>01 December, 2009 (01.12.09) |
|---|---|
| Name and mailing address of the ISA/<br>Japanese Patent Office | Authorized officer |
| Facsimile No. | Telephone No. |

Form PCT/ISA/210 (second sheet) (April 2007)

EP 2 346 041 A1

**INTERNATIONAL SEARCH REPORT**

International application No.

PCT/JP2009/067404

C (Continuation).    DOCUMENTS CONSIDERED TO BE RELEVANT

| Category* | Citation of document, with indication, where appropriate, of the relevant passages | Relevant to claim No. |
|---|---|---|
| P,X | JP 2009-211775 A  (Hitachi Maxell, Ltd.), 17 September 2009 (17.09.2009), paragraphs [0027] to [0030] (Family: none) | 1,8 |

Form PCT/ISA/210 (continuation of second sheet) (April 2007)

28

**EP 2 346 041 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002082280 A